(19) Europäisches Patentamt
European Patent Office
Office européen des brevets

(11) **EP 4 723 685 A1**

(12) **EUROPEAN PATENT APPLICATION**
published in accordance with Art. 153(4) EPC

(43) Date of publication:
08.04.2026 Bulletin 2026/15

(21) Application number: 24847740.8

(22) Date of filing: 31.05.2024

(51) International Patent Classification (IPC):
*H04W 4/02* (2018.01)

(52) Cooperative Patent Classification (CPC):
G01S 5/06; H04W 4/02; H04W 24/10; H04W 52/02;
H04W 64/00

(86) International application number:
PCT/CN2024/096560

(87) International publication number:
WO 2025/025777 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.07.2023 CN 202310957816

(71) Applicant: ZTE CORPORATION
Shenzhen, Guangdong 518057 (CN)

(72) Inventors:
• SUN, Jingfeng
Shenzhen, Guangdong 518057 (CN)
• HUANG, He
Shenzhen, Guangdong 518057 (CN)

(74) Representative: **Ziebig Hengelhaupt Intellectual Property Attorneys Patentanwaltskanzlei PartGmbB**
**Leipziger Straße 49**
**10117 Berlin (DE)**

(54) **TERMINAL DEVICE POSITIONING METHOD AND NETWORK-SIDE DEVICE**

(57) Provided in the present application are a terminal device positioning method and a network-side device. The method is applied to a network-side device, which includes a plurality of remote single-TR antennas, wherein the plurality of single-TR antennas are connected to a network-side device body by means of signal feeders, and the plurality of single-TR antennas are deployed at different positions in a target positioning scene. The method includes: measuring a target terminal by means of a plurality of single-TR antennas to obtain a plurality of measurement reports for the target terminal, wherein one single-TR antenna measurement correspondingly obtains one measurement report, and the measurement reports include measured values of specified parameters for determining the position of the target terminal; and determining position information of the target terminal on the basis of the measured values of the specified parameters in the plurality of measurement reports.

Measure, by the plurality of single-TR antennas, a target terminal to obtain a plurality of measurement reports for the target terminal, wherein one single-TR antenna correspondingly obtains one measurement report by measurement, and the measurement report comprises a measured value of a specified parameter for determining a position of the target terminal — S201

Determine position information of the target terminal on the basis of the measured values of the specified parameters in the plurality of measurement reports — S202

FIG. 2

**Description**

**CROSS REFERENCE TO RELATED APPLICATIONS**

This application is based upon and claims priority to Chinese Patent Application No. 202310957816.2 filed on July 31, 2023, entitled "TERMINAL DEVICE POSITIONING METHOD AND NETWORK-SIDE DEVICE", the entire contents of which are incorporated herein by reference.

**TECHNICAL FIELD**

The present application relates to the field of mobile communication technology, and in particular to a terminal device positioning method and a network-side device.

**BACKGROUD**

In an indoor positioning scene in which a terminal device is positioned by means of uplink relative time of arrival (UL RTOA) reported by base stations, measurement reports from three base stations are required for two-dimensional positioning, and, measurement reports from four base stations are required for three-dimensional positioning, so that position information of the terminal device can be calculated.

However, in a working scene such as chemical engineering and steels, in consideration of safety protection, there are strict requirements for the number and power of base stations deployed indoors; besides, in some office scenes, such as a conference room including a plurality of rooms, to position each room, at least three base stations need to be deployed in each room, which increases the cost of base station deployment and results in difficulty in power control.

Therefore, how to reduce the number of network-side devices (such as base stations) required for terminal device positioning is a technical problem to be solved urgently.

**SUMMARY**

In a first aspect, there is provided a terminal device positioning method, performed by a network-side device, the network-side device includes a plurality of remote single-TR antennas, wherein the plurality of single-TR antennas are connected to a network-side device body by means of signal feeders respectively, and the plurality of single-TR antennas are deployed at different positions in a target positioning scene, the method includes: measuring, by the plurality of single-TR antennas, a target terminal to obtain a plurality of measurement reports for the target terminal, wherein one single-TR antenna correspondingly obtains one measurement report by measurement, and the measurement report includes a measured value of a specified parameter for determining a position of the target terminal; and determining position information of the target terminal on the basis of the measured values of the specified parameters in the plurality of measurement reports.

In a second aspect, there is provided a terminal device positioning apparatus, applied to a network-side device, the network-side device includes a plurality of remote single-TR antennas, wherein the plurality of single-TR antennas are connected to a network-side device body by means of signal feeders respectively, and the plurality of single-TR antennas are deployed at different positions in a target positioning scene, the device includes: a report generation module, which is used to measure, by the plurality of single-TR antennas, a target terminal to obtain a plurality of measurement reports for the target terminal, wherein one single-TR antenna correspondingly obtains one measurement report by measurement, and the measurement report includes a measured value of a specified parameter for determining a position of the target terminal; and a position determination module, which is used to determine position information of the target terminal on the basis of the measured values of the specified parameters in the plurality of measurement reports.

In a third aspect, there is provided a network-side device, including a plurality of remote single-TR antennas, wherein the plurality of single-TR antennas are connected to a network-side device body by means of signal feeders respectively; the plurality of single-TR antennas are used to measure a target terminal at different positions in a target positioning scene, so as to obtain a plurality of measurement reports for the target terminal, one single-TR antenna correspondingly obtains one measurement report by measurement, and the measurement report includes a measured value of a specified parameter for determining a position of the target terminal.

In a fourth aspect, there is provided an electronic device, including: a processor; and a memory for storing instructions executable by the processor; wherein the processor is configured to execute the instructions, so as to implement the method of the first aspect.

In a fifth aspect, there is provided a computer-readable storage medium, when instructions in the storage medium are executed by a processor of an electronic device, the electronic device is enabled to perform the method of the first aspect.

## BRIEF DESCRIPTION OF THE DRAWINGS

In order to more clearly illustrate the technical solutions in the embodiments of the present application or in the prior art, the drawings required for use in the description of the embodiments or the prior art will be briefly introduced below. Apparently, the drawings described below are only some embodiments described in the present application, and for those skilled in the art, other drawings can be obtained based on these drawings without paying creative labor.

FIG. 1 is a schematic diagram of a multi-TR antenna remote design of a network-side device provided in embodiments of the present application.

FIG. 2 is a schematic flow chart of a terminal device positioning method provided in embodiments of the present application.

FIG. 3 is a schematic diagram of a first application scene (line of sight called LOS scene) of a terminal device positioning method provided in embodiments of the present application.

FIG. 4 is a schematic diagram of a second application scene (a scene including a plurality of compartments) of a terminal device positioning method provided in embodiments of the present application.

FIG. 5A is an example of a second application scene (a scene including a plurality of compartments) of a terminal device positioning method provided in embodiments of the present application.

FIG. 5B is a line chart provided in embodiments of the present application.

FIG. 6 is a first schematic diagram of a third application scene (LOS scene plus a plurality of compartments) of a terminal device positioning method provided in embodiments of the present application.

FIG. 7 is a second schematic diagram of a third application scene (LOS scene plus a plurality of compartments) of a terminal device positioning method provided in embodiments of the present application.

FIG. 8 is a schematic structural diagram of a network-side device provided in embodiments of the present application.

FIG. 9 is a schematic structural diagram of an electronic device provided in embodiments of the present application.

FIG. 10 is a schematic structural diagram of a terminal device positioning apparatus provided in embodiments of the present application.

## DETAILED DESCRIPTION

In order to enable those skilled in the art to better understand the technical solutions in embodiments of the application, technical solutions in one or more embodiments of the application will be described clearly and thoroughly below with reference to the accompanying drawings in embodiments of the application. Apparently, the embodiments described are part of the embodiments of the application rather than all of the embodiments. All other embodiments obtained by those skilled in the art without creative work based on embodiments in the application should fall within the scope of the application.

The terms "first", "second", and the like in the description and claims of the application are used to distinguish between similar objects rather than describing a specific order or a sequence. It is to be understood that data used in such a way may be interchanged where appropriate, whereby embodiments of the application can be implemented in an order other than those illustrated or described herein. In addition, the expression "and/or" in the description and claims of this application indicates at least one of the objects connected therewith, and the character "/" generally indicates that the objects associated therewith are in an "or" relationship.

In order to reduce the number of network-side devices (such as base stations) required for terminal device positioning, the present application proposes a terminal device positioning method and a network-side device, which are described below in conjunction with the accompanying drawings.

In embodiments of the present application, the network-side device used for terminal device positioning includes a plurality of antenna ports, for example, the network-side device is a 5G base station, the network-side device may be a base station including a 4TR antenna or an 8TR antenna. In other words, the antenna model of the network-side device provided in embodiments of the present application is NTR, wherein N is an arbitrary positive integer, and TR is an abbreviation of Transmit and Receive.

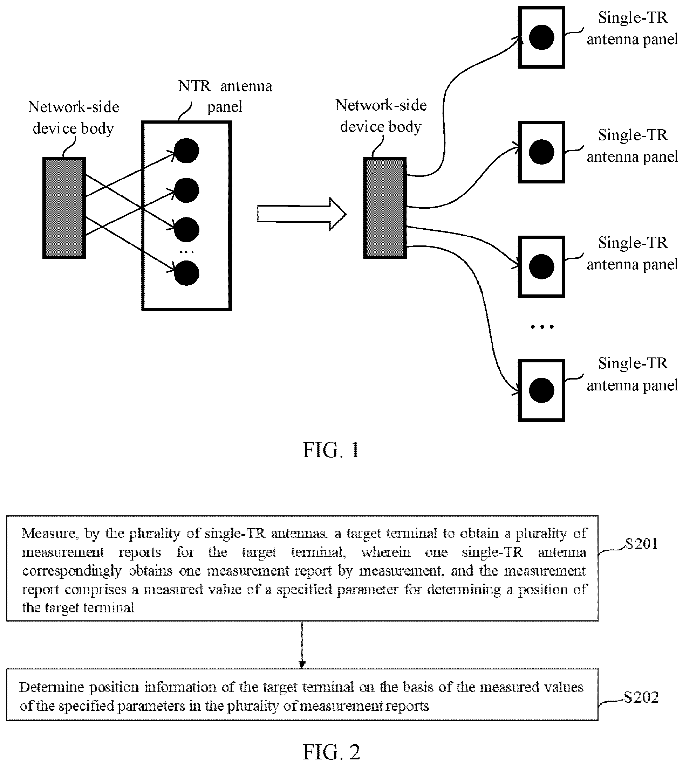

As shown in FIG. 1, in order to reduce the number of network-side devices (such as base stations) required for terminal device positioning, in embodiments of the present application, for a network-side device including a NTR antenna panel, one antenna panel is pulled out of each antenna port and is taken as a single-TR antenna panel, and the remote single-TR antennas are connected to the network- side device body by means of signal feeders respectively. That is, the original NTR antenna system is modified into a plurality of single-TR antenna systems. In this way, one network-side device may from remote antennas of N original antenna ports, one remote single-TR antenna is equivalent to one network-side device for measurement, and one measurement report for a terminal device is obtained by measurement, thereby reducing the number of network-side devices required for terminal device positioning, and realizing power degradation of the network-side device. In such solution, replace network-side devices that originally need to be deployed are replaced, with antennas, thus, the cost of deploying network-side devices for positioning can be reduced.

By means of the remote antenna solution shown in FIG. 1, a network side device originally analyzes sounding signals from a target terminal device and generates one measurement report, which may be represented as follows:

$$trp1: \{t = t_0, rsrp = d_0\}$$

wherein t represents an arrival delay, and rsrp represents a reference signal receiving power.

If N groups of single-TR antennas are constructed, each group of single antennas forms an antenna radiation pattern (ARP) and performs measurement independently. Thus, the following four measurement reports may be obtained:

$$arp1: \{t = t_1, rsrp = d_1\}$$

$$arp2: \{t = t_2, rsrp = d_2\}$$

$$arp3: \{t = t_3, rsrp = d_3\}$$

...

$$trp_N: \{t = t_N, rsrp = d_N\}$$

Therefore, N positioning measurement reports of one base station may be used to calculate position information of a target terminal.

A terminal device positioning method provided in embodiments of the present application may be used for indoor positioning, for example, positioning based on indoor 5G pico site, Bluetooth, and pulse radio (Ultra Wideband, UWB). A terminal device positioning method provided in embodiments of the present application may also be used for outdoor positioning, for example, positioning based on outdoor 5G macro base stations. That is to say, in embodiments of the present application, a network-side device may be any one of a 5G pico base station, a Bluetooth device, a UWB device, a 5G macro base station, and the like.

In embodiments of the present application, a network-side device is used for receiving a sounding signal, and calculating an arrival delay, an angle of arrival, and received signal strength of the received sounding signal inside the network-side device (i.e., a network-side device body). A terminal device is used for sending a sounding signal, and a plurality of remote single-TR antennas are used for receiving the same uplink sounding measurement signal from the terminal device.

An arrival delay may include, but is not limited to, a time advance (TA). A received signal strength may include, but is not limited to, at least one of a reference signal receiving power (RSRP), a received signal strength indication (RSSI), a reference signal received quality (RSRQ) and a signal interference noise ratio (SINR). A sounding signal may include, but is not limited to, one of an uplink sounding reference signal (SRS) and a single-frequency sinusoidal signal.

On the basis of the network-side device shown in FIG. 1, provided in the present application is a terminal device positioning method, the method may be applied to a network-side device including a plurality of remote single-TR antennas as shown in FIG. 1, wherein the plurality of single-TR antennas are connected to a network-side device body by means of signal feeders respectively, and the plurality of single-TR antennas are deployed at different positions in a target positioning scene. As shown in FIG. 2, the method may include steps 201 and 202.

At step 201, a target terminal is measured by the plurality of single-TR antennas to obtain a plurality of measurement reports for the target terminal, wherein one single-TR antenna correspondingly obtains one measurement report by measurement, and the measurement report includes a measured value of a specified parameter for determining a position of the target terminal.

In some cases, the step 201 may include: sounding signals from the target terminal are received by the plurality of single-TR antennas; and the sounding signals received by the plurality of single-TR antennas are analyzed respectively to generate the plurality of measurement reports. The method for analyzing the received sounding signals by the network device is described in detail herein.

The specified parameter may include, but is not limited to, at least one of an arrival delay, an angle of arrival or received signal strength.

At step 202, position information of the target terminal is determined on the basis of the measured values of the specified parameters in the plurality of measurement reports.

In embodiments of the present application, the target positioning scene is mainly described as an indoor positioning scene. In some cases, the target positioning scene may include three situations.

The first application scene: an obstacle-free scene, i.e., the Line of Sight (LOS) scene.

The second application scene: a scene including a plurality of compartments, such as a building including a plurality of floors, and a conference room with a plurality of rooms. Optionally, the plurality of compartments may further include an LOS scene, that is, the interior of a certain compartment belongs to the LOS scene, please refer to the third application scene below. The plurality of compartments may further include compartments of non-LOS scenes, such as compartments of irregular shapes or with obstacles.

The third application scene: the first application scene plus the second application scene, that is, LOS scene plus a plurality of compartments.

It should be noted that those skilled in the art may also expand the layout mode and positioning principle of a plurality of remote single-TR antennas outdoors from the layout mode and positioning principle of a plurality of remote single-TR antennas indoors shown in the embodiments of the present application.

For different application scenes, the specified parameters used for positioning may be different, which are described at different conditions therebelow.

1) The first application scene (LOS scene)

This scene is an open scene without line of sight obstacles, such as a rectangular empty room. In addition, for non-LOS scenes, that is, for compartments with irregular shapes or obstacles (such as buildings, stations, airport terminals, etc. that are T-shaped, cross shaped, Chinese character Feng shaped, or have obstacles in the middle). The room can be divided into a plurality of areas (compartments) based on LOS requirements, and then each area is used as a LOS scene.

In this scene, the number of single-TR antennas is no less than 2.

In this scene, a delay-based positioning method may be used, that is, the specified parameter includes an arrival delay.

In this scene, the deployment principles of a single-TR antenna include the following a to c.

a. A plurality of remote single-TR antennas are deployed at the boundary of the scene (such as corners) and the target area is ensured to be within the coverage area of the plurality of single-TR antennas.

b. The number of a plurality of remote single-TR antennas is greater than 3, during installation, it is ensured that the plurality of single-TR antennas are directly visible to a target user within the coverage area of the plurality of single-TR antennas.

c. During installation, it is ensured that a plurality of remote single-TR antennas are as far away from obstacles as possible, usually 2-3 meters away from obstacles.

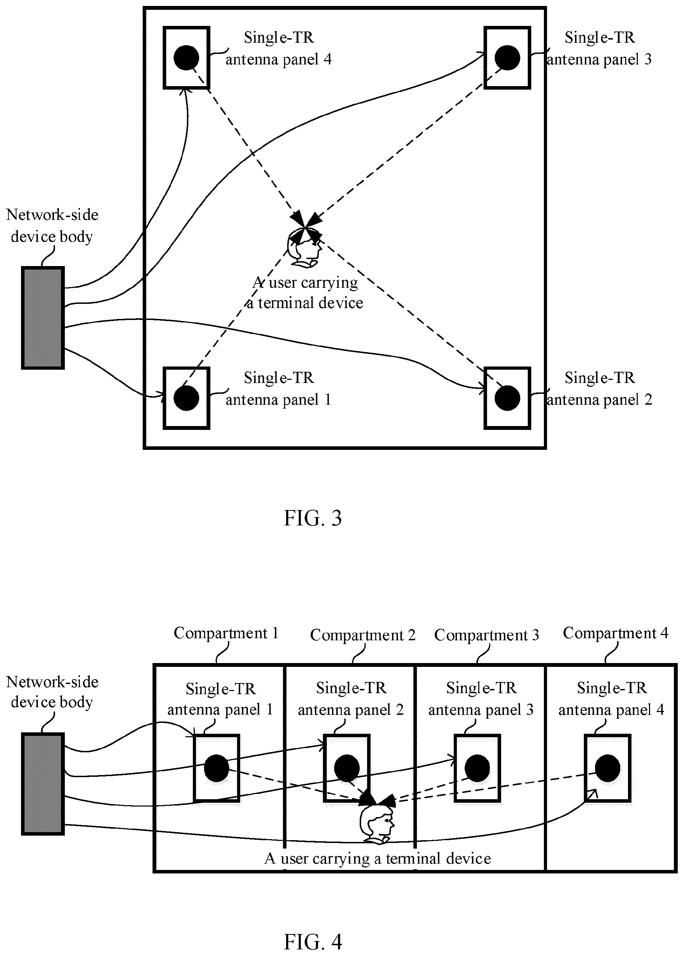

As shown in FIG. 3, if a target positioning scene is an open obstacle-free rectangular room, then a 4TR network-side device may be selected, four remote single-TR antennas are deployed at four corners of the room, and the four single-TR antennas are kept a certain distance away from the wall.

Accordingly, the step 202 may include: position information of the target terminal is determined on the basis of position information of the plurality of single-TR antennas and measured values of the arrival delays in the plurality of measurement reports.

Since the length of the signal feeder by which the remote single-TR antenna is connected with the network-side device body influences the arrival delay of the sounding signal (the sounding signal has certain delay, i.e., a first propagation delay, when being propagated in the signal feeder), in order to offset the propagation delay in the signal feeder, the embodiments of the present application propose two solutions.

Solution 1: the lengths of signal feeders by which different single-TR antennas among the plurality of single-TR antennas are connected to the network-side device body are the same, and the specific length thereof equals the length, required for the single-TR antenna farthest from the network-side device body, of the signal feeder among the plurality of single-TR antennas.

In solution 1, determining the position information of the target terminal on the basis of both the position information of the plurality of single-TR antennas and the measured values of the arrival delays in the plurality of measurement reports may include that position information of the target terminal is determined on the basis of the position information of the plurality of single-TR antennas, the measured values of the arrival delays in the plurality of measurement reports and a delay-based positioning method, wherein the delay-based positioning method includes an uplink time of arrival (UTOA)positioning method or an uplink time difference of arrival (UTDOA) positioning method.

It can be understood that, when signal feeders of the same length are selected, an UTOA or UTDOA positioning equation may be constructed to offset the propagation delay of the sounding signal in the signal feeder, so that the constructed delay difference equals the delay difference of the distances between the target terminal and the two ARPs (single-TR antennas).

In solution 1, taking the arrival delay being TA as an example, for the sounding signal from the target terminal to single-TR antennas, a plurality of measurement reports corresponding to a plurality of base stations can be measured by the single-TR antennas, and measurement information in the plurality of measurement reports may be represented as:

$$\text{Arp0: } prru{:}[x,y,z], TA = t + \nabla t$$

$$\text{Arp1: } prru_1'{:}\big[x_1',y_1',z_1'\big], TA_1 = t_1 + \nabla t$$

$$\text{Arp2: } prru_2'{:}\big[x_2',y_2',z_2'\big], TA_2 = t_2 + \nabla t$$

...

$$\text{Arpi: } prru_i'{:}\big[x_i',y_i',z_i'\big], TA_i = t_i + \nabla t$$

wherein $prru_i'{:}\big[x_i',y_i',z_i'\big]$ represents coordinates of the position of the *ith* single-TR antenna, $TA_i$ represents a time advance corresponding to the *ith* single-TR antenna, $\nabla t$ represents a propagation delay of the sounding signal in the signal feeder, $t_i$ represents the propagation delay of the sounding signal sent by the target terminal from the target terminal to the *ith* single-TR antenna, $i = 0, 1, 2, \cdots, N - 1$.

Solution 2: the lengths of signal feeders by which different single-TR antennas among the plurality of single-TR antennas are connected to the network-side device body are the same or different.

In solution 2, determining the position information of the target terminal on the basis of both the position information of the plurality of single-TR antennas and the measured values of the arrival delays in the plurality of measurement reports may include: for any single-TR antenna among the plurality of single-TR antennas, a first propagation delay of a sounding signal, received by the single-TR antenna, in the signal feeder corresponding to the single-TR antenna is determined on the basis between the single-TR antenna and the network-side device body of the length of the signal feeder; a second propagation delay (the arrival delay minus first propagation delay equals the second propagation delay) of a sounding signal, received by the single-TR antenna, from the target terminal to the single-TR antenna is determined on the basis of both the first propagation delay and a measured value of the arrival delay in a measurement report corresponding to the single-TR antenna; and position information of the target terminal is determined on the basis of position information of the plurality of single-TR antennas, second propagation delays corresponding to the plurality of single-TR antennas, and a delay-based positioning method, wherein the delay-based positioning method includes UTOA or UTDOA.

In solution 2, taking the arrival delay being TA as an example, for a sounding signal from the target terminal to each single-TR antenna, the delay of the sounding signal propagating in the signal feeder can be calculated first, and then the received delay can be offset to obtain the delay propagating between the target terminal and Arp (single-TR antenna) of the sounding signal. In solution 2, lengths of signal feeders corresponding to single-TR antennas need to recorded in the installation phase, and are transferred to the network-side device as positioning algorithm parameters through an interface, so as to calculate the offset delay information. The propagation delay of the sounding signal in the signal feeder is calculated by distance, and the calculation equation for the first propagation delay is as follows:

$$\nabla t_i = \frac{L_i}{c}$$

wherein $L_i$ is a length of the signal feeder between ith single-TR antenna and the network-side device body, and c is the speed of light.

In solution 2, a plurality of measurement reports corresponding to a plurality of base stations can be measured by single-TR antennas, and measurement information in the plurality of measurement reports may be expressed as:

$$\text{Arp0: } prru{:}[x,y,z], TA = t + \nabla t_0$$

$$\text{Arp1: } prru_1':[x_1',y_1',z_1'], TA_1 = t_1 + \nabla t_1$$

$$\text{Arp2: } prru_2':[x_2',y_2',z_2'], TA_2 = t_2 + \nabla t_2$$

...

$$\text{Arpi: } prru_i':[x_i',y_i',z_i'], TA_i = t_i + \nabla t_i$$

wherein $prru_i':[x_i',y_i',z_i']$ represents coordinates of a position of ith single-TR antenna, $TA_i$ represents a time advance corresponding to *ith* single-TR antenna, $\nabla t_i$ represents a propagation delay, i.e., the first propagation delay, of the sounding signal between *ith* single-TR antenna and the network-side device body in the signal feeder , $t_i$ represents a propagation delay of the sounding signal sent by the target terminal from the target terminal to *ith* single-TR antenna - the second propagation delay, $i$ = 0, 1, 2, $\cdots$, $N$ - 1.

After determining coordinates of the position of each single-TR antenna and the propagation delay corresponding to each single-TR antenna by the above-mentioned solution 1 or solution 2, assuming that the coordinates of the target terminal are: [X, Y, Z], if UTDOA is used to determine the position of the target terminal, the following solution equation may be constructed:

$$\sqrt{(x-X)^2 + (y-Y)^2 + (z-Z)^2} - \sqrt{(x_1'-X)^2 + (y_1'-Y)^2 + (z_1'-Z)^2} = c*(t-t_1)$$

$$\sqrt{(x-X)^2 + (y-Y)^2 + (z-Z)^2} - \sqrt{(x_2'-X)^2 + (y_2'-Y)^2 + (z_2'-Z)^2} = c*(t-t_2)$$

......

$$\sqrt{(x-X)^2 + (y-Y)^2 + (z-Z)^2} - \sqrt{(x_i'-X)^2 + (y_i'-Y)^2 + (z_i'-Z)^2} = c*(t-t_i)$$

When the number of a plurality of remote single-TR antennas exceeds 4, at least 3 sets of equations may be constructed by the above-mentioned method, and the coordinates of the target terminal [X, Y, Z] may be solved by the least squares method, thereby achieving the objective of positioning the target terminal by using one base station.

The process of using TOA to construct a solution equation may refer to the related art, which will not be described in detail in the embodiments of the present application.

Optionally, in the first application scene, the position of the target terminal may also be determined based on an angle of arrival (AOA) positioning method, and the corresponding specified parameter includes an angle of arrival. In this case, the step 202 may include: position information of the target terminal is determined on the basis of position information of the plurality of single-TR antennas, measured values of the angles of arrival in the plurality of measurement reports, and an AOA based positioning method.

Similarly, the process of using AOA to construct a solution equation is not described in detail in the embodiments of the present application.

Optionally, in the first application scene, the position of the target terminal may also be determined comprehensively by a delay-based positioning method in combination with an angle-of-arrival (AOA)-based positioning method. In this case, the specified parameters include arrival delay and angle of arrival, wherein determining position information of the target terminal on the basis of measured values of the specified parameters in the plurality of measurement reports includes: the position information of the target terminal is determined on the basis of position information of the plurality of single-TR antennas, measured values of the arrival delays and the angles of arrival in the plurality of measurement reports, the uplink time of arrival (UTOA) positioning method and the angle of arrival (AOA) positioning method; alternatively, the position information of the target terminal is determined on the basis of position information of the plurality of single-TR antennas, measured values of the arrival delay and the angle of arrival in the plurality of measurement reports, and the uplink time difference of arrival (UTDOA) positioning method and the angle of arrival (AOA) positioning method.

It should be noted that when the delay-based positioning method and the angle of arrival (AOA)-based positioning method are combined to determine the position information of the target terminal, the solution equations for coordinates of the target terminal may be constructed based on the arrival delay and the angle of arrival respectively, and then coordinate information of the target terminal may be obtained by simultaneously solving the equations, which will not be elaborated in the embodiments of the present application.

2) Second application scene (a scene including a plurality of compartments)

The second application scene may be a scene with a plurality of compartments, for example, a scene including a plurality of rooms or a scene including a plurality of floors. In a cross-floor scene, on one hand, it becomes more difficult to use signal feeders of the same length to offset the delay, and on the other hand, the accuracy of the delay between compartments is low, resulting in a large positioning accuracy error. Therefore, in this scene, a positioning method based on received signal strength may be used for positioning, which is more accurate.

In this scene, at least one single-TR antenna is deployed in one compartment, and the specified parameter of at least one single-TR antenna in one compartment includes the received signal strength. In this scene, the specific principle in deploying single-TR antennas may include the following a and b.

a. For a scene that includes a plurality of rooms (such as a scene that includes a plurality of offices): one remote single-TR antenna is deployed at the central area of each compartment (such as a room), as shown in FIG. 4, a single-TR antenna panel 1, single-TR antenna panel 2, single-TR antenna panel 3, and single-TR antenna panel 4 are deployed at the central areas of compartments 1, 2, 3, and 4, respectively; the network- side device body may be deployed at any of the four compartments or another room except these compartments, and the network-side device body may be connected to the remote single-TR antennas by means of signal feeders.

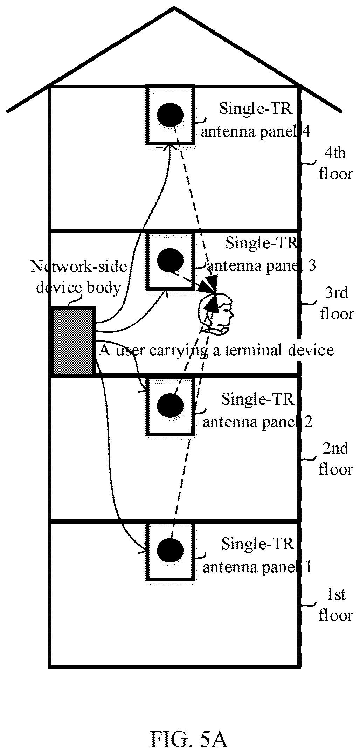

b. For a cross-floor scene: one remote single-TR antenna is deployed at each floor, as shown in FIG. 5A, a single-TR antenna panel 1, single-TR antenna panel 2, single-TR antenna panel 3, and single-TR antenna panel 4 are deployed at the central areas of the roofs of the first, second, third, and fourth floors, respectively; the network- side device body may be deployed at any of the four floors or another position except these floors, and the network-side device body may be connected to remote single-TR antennas by means of signal feeders.

With the above-mentioned deployment, a plurality of measurement reports corresponding to a plurality of base stations can be measured by the single-TR antennas, and measurement information in the plurality of measurement reports may be expressed as:

$$\text{Arp0:}\ prru{:}[x,y,z], rsrp_0 = d_0 + \nabla d_0$$

$$\text{Arp1:}\ prru'_1{:}[x'_1,y'_1,z'_1], rsrp_1 = d_1 + \nabla d_1$$

$$\text{Arp2:}\ prru'_2{:}[x'_2,y'_2,z'_2], rsrp_2 = d_2 + \nabla d_2$$

... wherein $prru'_i{:}[x'_i,y'_i,z'_i]$ represents coordinates of a position of the ith single-TR antenna, $rsrp_i$ represents a received signal strength corresponding to the *i*th single-TR antenna, $\nabla d_i$ represents path loss of the sounding signal in the signal feeder between the *i*th single-TR antenna and the network-side device body, $d_i$ represents an actual received signal strength value from the target terminal to the ith single-TR antenna of the sounding signal received by the ith single-TR antenna, and $i = 0,1,2,\cdots,N$ - 1.

$\nabla d_i = m \lg f + n \lg L_i + A$, *f* represents the frequency, m represents the decibel coefficient of frequency loss, n represents the decibel coefficient of distance loss, $L_i$ represents the length between the *i*th single-TR antenna and the network-side device body of a signal feeder, and *A* represents the circuit attenuation decibel.

On this basis, as an example, the step 202 may include: position information of the target terminal is obtained by searching a pre-established fingerprint library according to the measured values of the received signal strength in the plurality of measurement reports, wherein the fingerprint library stores correspondence between coordinate information of each point in the target positioning scene and the value of received signal strength from a terminal device at the point received by the plurality of single-TR antennas, and data in the fingerprint library is premeasured.

As another example, the step 202 may include: position information of the target terminal is determined on the basis of both position information of the plurality of single-TR antennas and measured values of the received signal strength in the plurality of measurement reports.

In some cases, determining the position information of the target terminal on the basis of both the position information of the plurality of single-TR antennas and measured values of the received signal strength in the plurality of measurement reports may include: for any single-TR antenna among the plurality of single-TR antennas, a path loss of a sounding signal, received by the single-TR antenna, in a signal feeder corresponding to the single-TR antenna is determined on the basis of the length between the single-TR antenna and the network-side device body of the signal feeder; an actual value of received signal strength of the sounding signal, received by the single-TR antenna, from the target terminal to the single-TR antenna is determined on the basis of both the path loss and the measured value of received signal strength in the measurement report corresponding to the single-TR antenna, in which the specific calculation equations can refer to the foregoing description; and the position information of the target terminal is determined on the basis of position information of the plurality of single-TR antennas and actual values of received signal strength corresponding to the plurality of single-TR antennas.

Determining the position information of the target terminal on the basis of both the position information of the plurality of single-TR antennas and the actual values of received signal strength corresponding to the plurality of single-TR antennas may include: a maximum value is determined from actual values of received signal strength corresponding to the plurality of single-TR antennas; and a compartment where a single-TR antenna corresponding to the maximum value is located is determined as a target compartment where the target terminal is located.

In a first example, the actual values of received signal strength corresponding to the plurality of single-TR antennas may be compared directly to determine the maximum value from the actual values of received signal strength corresponding to the plurality of single-TR antennas.

In a second example, the solution may be performed by function fitting. In some cases, determining the maximum value from the actual values of received signal strength corresponding to the plurality of single-TR antennas is determined may include the following steps 1 to 6.

At step 1, for any single-TR antenna among the plurality of single-TR antennas, the distance relative to the coordinate origin of the single-TR antenna is determined according to coordinate information of the single-TR antenna; wherein the coordinate origin is a preset origin of a coordinate system that is used to characterize coordinates of each single-TR antenna and a target terminal.

The equation for calculating the distance relative to the coordinate origin of the i-th single-TR antenna may be represented as:

$$l_i = \sqrt{(x_i')^2 + (y_i')^2 + (z_i')^2}$$

wherein $[x_i, y_i, z_i]$ represents coordinates of the i-th single-TR antenna.

Optionally, the distances relative to the coordinate origin of the plurality of single-TR antennas may be sorted to facilitate subsequent function fitting.

At step 2: an objective function is constructed for the distances relative to the origin of the plurality of single-TR antennas and the actual values of received signal strength corresponding to the plurality of single-TR antennas, wherein the objective function is a function of the actual value of received signal strength corresponding to the single-TR antenna with respect to the distance relative to the origin of the single-TR antenna.

The objective function may be represented as:

$$f(l_i) = rsrp_i$$

wherein $rsrp_i$ represents the actual value of received signal strength corresponding to the i-th single-TR antenna.

At step 3, the coordinate values of the plurality of single-TR antennas in the curve of the objective function is determined.

At step 4, a line chart is constructed according to the coordinate values of the plurality of single-TR antennas in the curve of the objective function.

In some cases, the coordinates of the plurality of single-TR antennas are substituted into the objective function to obtain the actual values of received signal strength corresponding to the plurality of single-TR antennas, and the actual values of received signal strength corresponding to the plurality of single-TR antennas are connected with a broken line so as to obtain a line chart.

At step 5, an extreme value and/or a maximum value in the line chart are/is determined.

The extreme value and the maximum value may be represented as:

$$f(x)_{extreme} = f(l_m) = rsrp_m$$

$$f(x)_{maximum} = f(l_n) = rsrp_n$$

At step 6, a position of a compartment where a single-TR antenna corresponding to the extreme value and/or maximum value is located is determined as the position (target compartment) where the target terminal is located.

The following describes, by using an application scene shown in FIG. 5A as an example, a process of determining the position of the target terminal by using the second example.

In the first step, a 4TR base station is selected for the application scene shown in FIG. 5A. Four single-TR antenna panels are pulled out, the positioning requirement is to determine the floor where the target terminal is located, the remote single-TR antenna panels are deployed in the middle of the ceilings of the four floors, and the base station is installed on the third floor.

In the second step, the base station obtains coordinate information and measured values of received signal strength of each ARP by the single-TR antenna panel as follows:

$$\text{Arp1:} \quad arp1:[4m,6m,5m], rsrp = -120dB$$

$$\text{Arp2:} \quad arp2:[4m,6m,10m], rsrp = -108dB$$

$$\text{Arp3:} \quad arp3:[4m,6m,15m], rsrp = -98dB$$

$$\text{Arp4:} \quad arp4:[4m,6m,20m], rsrp = -117dB$$

In the third step, the objective function $f(l_i) = rsrp_i$ is constructed according to the method of constructing the objective function in the second example above.

In the fourth step, the point data of each single-TR antenna panel is calculated based on the objective function as follows:

$$[l_1, rsrp_1] = (8.78, -120)$$

$$[l_2, rsrp_2] = (12.33, -108)$$

$$[l_3, rsrp_3] = (16.64, -98)$$

$$[l_4, rsrp_4] = (21.26, -117)$$

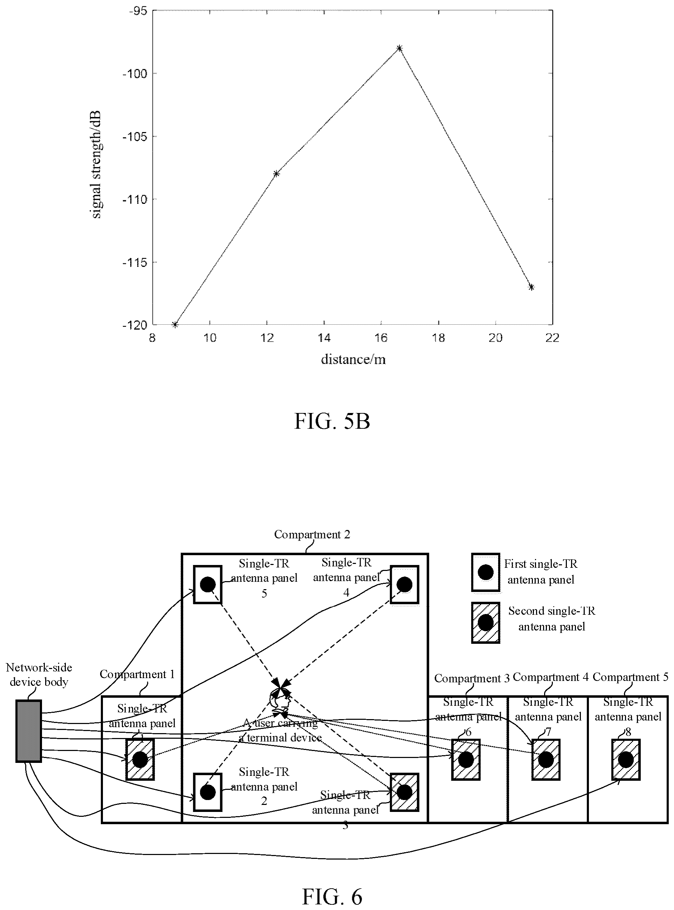

In the fifth step, a line chart is constructed based on the calculated point data of each single-TR antenna panel, as shown in FIG. 5B. From FIG. 5B, it can be analyzed that there is only one extreme value but no maximum value in the curve, therefore, it can be known that the floor where the target terminal is located is the floor where ARP3 (single-TR antenna panel 3) is located. The terminal positioning method provided in the embodiments of the present application is low in the algorithm complexity, can reduce the cost of station construction, and is high in the accuracy, therefore, the method is highly practical.

Optionally, in the above-mentioned second application scene, if at least two single-TR antennas are deployed in a target compartment (which is equivalent to the first application scene plus the second application scene), and the specified parameters of the least two single-TR antennas further include at least one of an arrival delay or an angle of arrival, the method shown in FIG. 2 may further include: position information of the target terminal in the target compartment is determined on the basis of position information of at least two single-TR antennas in the target compartment and measured values of the arrival delay and/or the angle of arrival in measurement reports corresponding to the at least two single-TR antennas, wherein the target compartment is one of the plurality of compartments.

As an example, if at least two single-TR antennas are deployed in a target compartment (which is equivalent to the first application scene plus the second application scene), and the specified parameters of the least two single-TR antennas further include the arrival delay, then position information of the target terminal in the target compartment is determined on the basis of position information of at least two single-TR antennas in the target compartment, the measured values of arrival delay in the measurement reports corresponding to the least two single-TR antennas and the delay-based positioning method, wherein the delay-based positioning method includes an uplink time of arrival (UTOA)

positioning method or an uplink time difference of arrival (UTDOA) positioning method.

As another example, if at least two single-TR antennas are deployed in a target compartment (which is equivalent to the first application scene plus the second application scene), and the specified parameters of the least two single-TR antennas further include an angle of arrival, then position information of the target terminal in the target compartment is determined on the basis of position information of the least two single-TR antennas in the target compartment, measured values of angle of arrival in the measurement reports corresponding to the least two single-TR antennas and the angle of arrival (AOA) positioning method.

As yet another example, if at least two single-TR antennas are deployed in a target compartment (which is equivalent to the first application scene plus the second application scene), and the specified parameters of the least two single-TR antennas further include the arrival delay and angle of arrival, then position information of the target terminal in the target compartment is determined on the basis of position information of the least two single-TR antennas in the target compartment, measured values of arrival delay and angle of arrival in the measurement reports corresponding to the least two single-TR antennas, the uplink time of arrival (UTOA) positioning method and the angle of arrival (AOA) positioning method; alternatively, position information of the target terminal in the target compartment is determined on the basis of position information of the least two single-TR antennas, measured values of arrival delay and angle of arrival in the measurement reports corresponding to the least two single-TR antennas, the uplink time difference of arrival (UTDOA) positioning method and the angle of arrival (AOA) positioning method.

It may be understood that upon the condition of the first application scene plus the second application scene (that is, the third application scene described below), the target compartment where the target terminal is located may be determined based on the method described above for the second application scene, and then a specific position of the target terminal in the target compartment may be determined based on the method described above for the first application scene, thereby locating an accurate position of the target terminal. The specific calculation method may refer to the description of the corresponding application scene above, and will not be repeated here.

Optionally, in the second application scene, prior to that a compartment where a single-TR antenna corresponding to the maximum value is located is determined as a target compartment where the target terminal is located, whether there is abnormality in measured values of received signal strength in the plurality of measurement reports may be determined; and upon the condition that it is determined that there is no abnormality in the measured values of received signal strength in the plurality of measurement reports, a position of a compartment where a single-TR antenna corresponding to an extreme value or the maximum value is located is determined as a position where the target terminal is located.

The method for determining whether there is abnormality in measured values of received signal strength in the measurement reports may include: determining whether a measured value of the received signal strength is obviously lower than a normal value (such as the rated minimum value), if so, it is determined that there is an abnormality; otherwise, there is no abnormality; alternatively, the changing trend of the above-mentioned broken line may be used for determining, if there is an abnormality in the changing trend of the broken line, such as the appearance of unreasonable troughs, it is determined that there is abnormality; otherwise, there is no abnormality.

3) The third application scene (LOS scene plus a plurality of compartments)

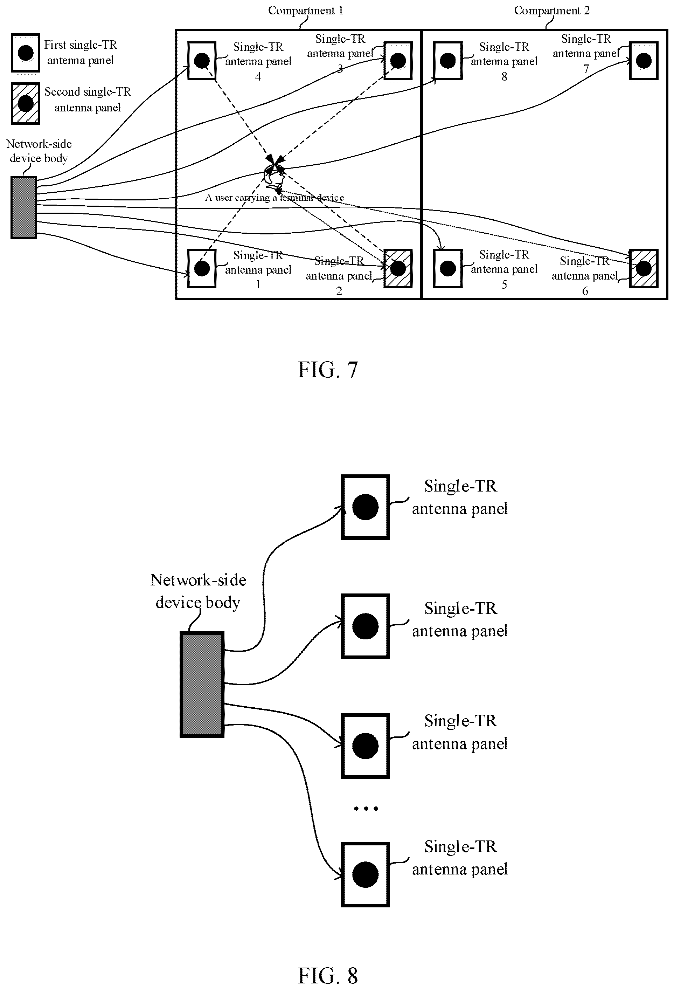

In actual application, there may be a situation where both the first application scene and the second application scene appear at the same time. That is, the target positioning scene includes a plurality of compartments, and the plurality of compartments include at least one first compartment that is obstacle-free. In some cases, as shown in FIG. 6, there are five compartments in the actual application scene, of which the second compartment is a larger LOS scene (i.e., the first compartment); as shown in FIG. 7, there are two compartments in an actual application scene, and the two compartments both belong to larger LOS scene (i.e., the first compartments). In such a scene, the positioning requirement is changed to firstly determine which compartment the target terminal is located at, then determine whether the compartment is an LOS scene, and if YES, further determine the position of the target terminal in the compartment.

In this scene, a delay-based positioning method and a positioning method based on received signal strength may be used simultaneously, the specified parameters may include the arrival delay and received signal strength, optionally, the specified parameters may further include the angle of arrival.

In this scene, the deployment method of single-TR antennas includes: the plurality of single-TR antennas include a first single-TR antenna and a second single-TR antenna, a first compartment is deployed with at least one first single-TR antenna and one second single-TR antenna, a second compartment is deployed with one second single-TR antenna, the specified parameters corresponding to measurement of the first single-TR antenna include at least one of arrival delay or angle of arrival, the specified parameters corresponding to measurement of the second single-TR antenna include received signal strength, and the specified parameters corresponding to measurement of the second single-TR antenna further include at least one of arrival delay or angle of arrival, and the second compartment is a compartment among the plurality of compartments other than the first compartment.

As shown in FIG. 6, second single-TR antenna panels are deployed in the central areas of compartment 1, compartment 3, compartment 4, and compartment 5 (i.e., the second compartments) respectively; first single-TR antenna panels are deployed at three corners of compartment 2 (i.e., the first compartment) respectively, and a second single-TR antenna panel is deployed at the remaining one corner. In actual applications, when faced with the application scene shown in FIG. 6, an 8TR 5G base station may be selected as the network-side device for positioning, and the 8TR 5G base station may be configured to be a 5G base station with 8 remote single-TR antennas, and then the 8 single-TR antennas are deployed as shown in FIG. 6.

As shown in FIG. 7, the first single-TR antenna panels are deployed at three corners of each of the compartment 1 (the first compartment) and compartment 2 (the first compartment), and second single-TR antenna panels are deployed at the remaining one corner of same. In actual applications, when faced with the application scene shown in FIG. 7, an 8TR 5G base station may also be selected as the network-side device for positioning, and the 8TR 5G base station may be configured to be a 5G base station with 8 remote single-TR antennas, and then the 8 single-TR antennas are deployed as shown in FIG. 7.

It should be noted that when the second single-TR antenna also participates in delay positioning, the second single-TR antenna is not only used to measure the received signal strength, but also used to measure at least one of arrival time and angle of arrival. In other words, the second single-TR antenna is different from the first single-TR antenna in that the second single-TR antenna also measures the received signal strength.

In this scene, for the first compartment, the deployment principle of the single-TR antennas follows the deployment principle for the first application scene described above; for the second compartment, the deployment principle of the single-TR antennas follows the deployment principle for the second application scene described above.

In this scene, the step 202 may include: a target compartment where the target terminal is located is determined on the basis of position information of the second single-TR antenna in both the first compartment and the second compartment, and measured values of the received signal strength in the measurement reports obtained by corresponding measurements of the second single-TR antenna in the first compartment and the second compartment; if the target compartment is a first compartment, then position information of the target terminal in the target compartment is determined on the basis of position information of the plurality of single-TR antennas and the measured value of at least one of the arrival delay and the arrival angle in the plurality of measurement reports; and if the target compartment is a second compartment, then the position of the second compartment is determined to be the position of the target terminal.

The specific process of determining a target compartment where the target terminal is located on the basis of position information of the second single-TR antenna in the first compartment and the second compartment, and measured values of the received signal strength in the measurement report obtained by corresponding measurements of the second single-TR antenna in the first compartment and the second compartment may refer to the above description of the second application scene; and the specific process of determining position information of the target terminal in the target compartment on the basis of position information of the plurality of single-TR antennas and the measured value of at least one of the arrival delay and the angle of arrival in the plurality of measurement reports may refer to the above description of the first application scene, which will not be repeated.

In addition, it can be seen from the above description that, no matter positioning is performed based on arrival delay or received signal strength, the signal feeder between the remote single-TR antenna and the network-side device body would cause loss of a positioning signal. For example, according to the above description of how to locate a terminal device in the first application scene, it can be seen that the sounding signal received by the single-TR antenna may generate a first propagation delay in the signal feeder corresponding to the single-TR antenna; according to the above description of how to locate a terminal device in the second application scene, it can be seen that the sounding signal received by the single-TR antenna may generate path loss in the signal feeder corresponding to the single-TR antenna. These losses have an impact on positioning accuracy and need to be eliminated.

In view of this, no matter the lengths of signal feeders by which different single-TR antennas among the plurality of single-TR antennas are connected to the network-side device body are the same or different, the above-mentioned step 202 may include: for any single-TR antenna among the plurality of single-TR antennas, a propagation delay or path loss of a sounding signal, received by the single-TR antenna, in a signal feeder corresponding to the single-TR antenna is determined on the basis of the length between the single-TR antenna and the network-side device body of the signal feeder; and position information of the target terminal is determined on the basis of both a measured value of the specified parameter in the measurement report corresponding to the single-TR antenna and a propagation delay or path loss in the signal feeder corresponding to the single-TR antenna.

The detailed process of determining position information of the target terminal on the basis of measured values of the specified parameters in a measurement report corresponding to the single-TR antenna and a propagation delay or path loss in a signal feeder corresponding to the single-TR antenna may refer to the above description of the first application scene and the second application scene, which will not be repeated here.

According to the terminal device positioning method provided in the embodiments of the present application described above, a plurality of TR antennas included in one network-side device are remotely processed, so that the network-side device has a plurality of remote single TR antennas, and the plurality of remote single TR antennas are deployed at different positions in a target positioning scene, in this way, the network-side device may obtain a plurality of measurement reports for a target terminal t from a plurality of remote single TR antennas by measuremen, and position information of the target terminal may be determined based on measured values of the specified parameters in the plurality of measurement reports. It can be seen that the terminal device positioning solution provided in the embodiments of the present application eliminates the need to deploy a plurality of network-side devices in a target positioning scene, and a terminal device may be positioned by one network-side device, which reduces the number of network-side devices required for terminal device positioning, reduces power consumption, makes it easier to control power, and reduces the cost in deploying the network-side devices required for positioning.

As shown in FIG. 8, an embodiment of the present application further provides a network-side device, including a plurality of remote single-TR antennas, the plurality of single-TR antennas are connected to a network-side device body by means of signal feeders respectively; the plurality of single-TR antennas are used to measure a target terminal at different positions in a target positioning scene, so as to obtain a plurality of measurement reports for the target terminal, one single-TR antenna correspondingly obtains one measurement report by measurement, and the measurement report includes a measured value of a specified parameter for determining a position of the target terminal.

It can be understood that when the network-side device is used for terminal device positioning, the number of network-side devices required for terminal device positioning may be reduced, power consumption may be reduced, power control becomes easier, and the cost in deploying the the network-side devices required for positioning can be reduced.

Specific embodiments of the present application are described above. Other embodiments are within the scope of the appended claims. In some cases, the actions or steps recorded in the claims may be performed in an order different from that in the embodiments and still achieve the desired results. In addition, the processes depicted in the accompanying drawings do not necessarily require a specific order or continuous order shown to achieve the desired results. In some embodiments, multitasking and parallel processing are also possible or may be advantageous.

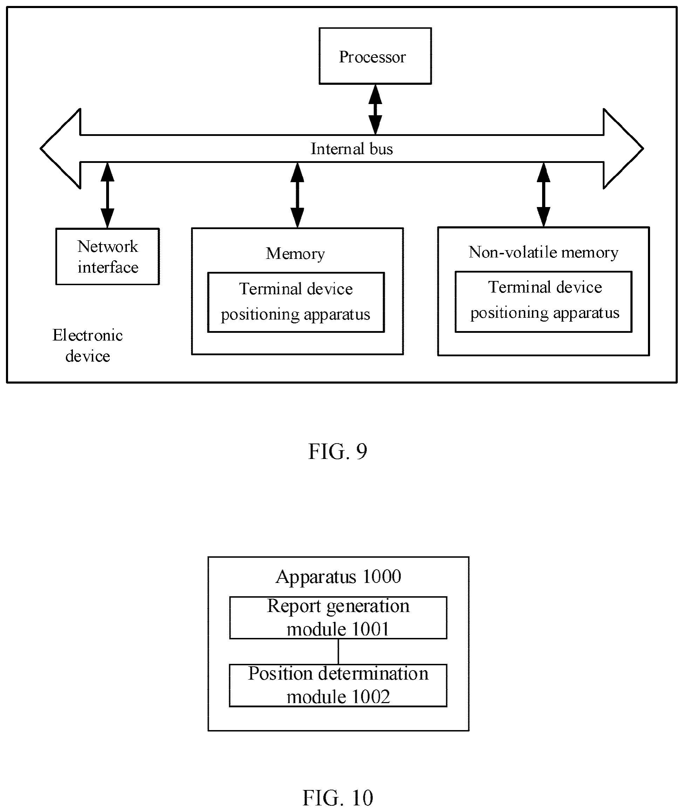

FIG. 9 is a schematic structural diagram of an electronic device provided in an embodiment of the present application. Referring to FIG. 9, at the hardware level, the electronic device includes a processor, and optionally, an internal bus, a network interface, and a memory. The memory may include an internal memory, for example a high-speed random access memory (RAM), and may also include a non-volatile memory (non-volatile memory), such as at least one disk storage, etc. Of course, the electronic device may also include hardware required for other services.

The processor, network interface and memory may be interconnected by an internal bus, which may be an Industry Standard Architecture (ISA) bus, a Peripheral Component Interconnect (PCI) bus or an Extended Industry Standard Architecture (EISA) bus, etc. The bus may be divided into an address bus, a data bus, a control bus, etc. For ease of representation, only one bidirectional arrow is used in FIG. 9, but it does not mean that there is only one bus or one type of bus.

The memory is used to store the program. Specifically, the program may include program codes, and the program codes include computer operation instructions. The memory may include an internal memory and a non-volatile memory, and provides instructions and data to the processor.

The processor reads corresponding computer program from the non-volatile memory into the memory and then runs it, forming a terminal device positioning apparatus at the logical level. The processor executes the program stored in the memory and is specifically used to execute the following operations: measuring, by the plurality of single-TR antennas, a target terminal to obtain a plurality of measurement reports for the target terminal, wherein one single-TR antenna correspondingly obtains one measurement report by measurement, and the measurement report comprises a measured value of a specified parameter for determining a position of the target terminal; and determining position information of the target terminal on the basis of the measured values of the specified parameters in the plurality of measurement reports

The method performed by a terminal device positioning apparatus disclosed in the embodiment shown in FIG. 9 of the present application may be applied to a processor or implemented by a processor. The processor may be an integrated circuit chip with signal processing capabilities. In the implementation process, each step of the above method may be completed by an integrated logic circuit in the form of hardware in the processor or an instruction in the form of software. The above processor may be a general-purpose processor, including a central processing unit (CPU), a network processor (NP), etc.; it may also be a digital signal processor (DSP), an application-specific integrated circuit (ASIC), a field-programmable gate array (FPGA) or other programmable logic devices, discrete gates or transistor logic devices, discrete hardware components. The methods, steps and logic block diagrams disclosed in the embodiments of the present application may be implemented or executed. A general-purpose processor may be a microprocessor or the processor may also be any conventional processor, etc. The steps of the method disclosed in the embodiments of the present application may be directly embodied as a hardware decoding processor for execution, or may be implemented by a combination of hardware and software modules in the decoding processor. The software module may be located in a storage medium well-known in the art, such as a random access memory, a flash memory, a read-only memory, a programmable read-only memory, or an electrically erasable programmable memory, a register, etc. The storage medium is located in the memory, and the processor reads information in the memory and completes the steps of the above method in combination with its hardware.

The electronic device may also perform the method of FIG. 2 and implement functions of the terminal device positioning apparatus in the embodiment shown in FIG. 2, and which will not be described in detail in the embodiments of the present application.

In addition to software implementation methods, the electronic device of the present application does not exclude other implementation methods, such as logic devices or a combination of software and hardware, etc., that is, the execution subject of the following processing flow is not limited to each logic unit, but may also be hardware or logic devices.

An embodiment of the present application further proposes a computer-readable storage medium, which stores one or more programs including instructions, when the instructions are executed by a portable electronic device including a plurality of applications, the portable electronic device performs the method of the embodiment shown in FIG. 2, and is specifically used to perform the following operations: measuring, by the plurality of single-TR antennas, a target terminal to obtain a plurality of measurement reports for the target terminal, wherein one single-TR antenna correspondingly obtains one measurement report by measurement, and the measurement report comprises a measured value of a specified parameter for determining a position of the target terminal; and determining position information of the target terminal on the basis of the measured values of the specified parameters in the plurality of measurement reports.

FIG. 10 is a schematic structural diagram of a terminal device positioning apparatus 1000 provided in an embodiment of the present application. The terminal device positioning apparatus 1000 may be applied to a network-side device, the network-side device includes a plurality of remote single-TR antennas, wherein the plurality of single-TR antennas are connected to a network-side device body by signal feeders, and the plurality of single-TR antennas are deployed at different positions in a target positioning scene. Referring to FIG. 10, in a software implementation, the terminal device positioning apparatus 1000 may include: a report generation module 1001 and a position determination module 1002.

The report generation module 1001 is used to measure, by the plurality of single-TR antennas, a target terminal to obtain a plurality of measurement reports for the target terminal, wherein one single-TR antenna correspondingly obtains one measurement report by measurement, and the measurement report comprises a measured value of a specified parameter for determining a position of the target terminal; .

In some cases, the report generation module 1001 may be used to: receive, by the plurality of single-TR antennas, sounding signals from the target terminal; and analyze the sounding signals received by the plurality of single-TR antennas respectively to generate the plurality of measurement reports. The method for a network-side device to analyze received sounding signals is l not described in detail herein.

The specified parameter may include, but are not limited to, at least one of arrival delay, the angle of arrival and received signal strength.

The position determination module 1002 is used to determine position information of the target terminal on the basis of measured values of the specified parameters in the plurality of measurement reports.

In some cases, the specific process in which a position determination module 1002 performs positioning for different application scenes may refer to the description of the method embodiment shown in FIG. 2 above, which will not be repeated here.

The terminal device positioning apparatus 1000 provided in the embodiments of the present application may also perform the method of FIG. 2 and achieve the same technical effect, which will not be repeated in the embodiments of the present application.

In summary, the above descriptions are merely some embodiments of the present application and are not intended to limit the protection scope of the present application. Any modification, equivalent replacement, improvement, etc., that is made within the spirit and principle of the present application should be included within the protection scope of the present application.

The system, device, module or unit described in the above embodiments may be specifically implemented by a computer chip or entity, or a product with certain functions. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

Computer readable media include permanent and non-permanent, removable and non-removable media that may be used to store information by any method or technology. Information may be computer-readable instructions, data structures, program modules or other data. Examples of computer storage media include, but are not limited to, Phase Change Memory (PCM), Static Random-Access Memory (SRAM), Dynamic Random Access Memory (DRAM), other types of random access memory (RAM), Read-Only Memory (ROM), Electrically Erasable Programmable Read Only Memory (EEPROM), Flash memory or other memory technology, Compact Disc Read-Only Memory (CD-ROM), Digital Video Disc (DVD) or other optical storage, magnetic cassettes, magnetic tape magnetic disk storage or other magnetic storage devices or any other non-transmission media that may be used to store information that is accessible to a computing device. According to the definition in this document, computer-readable media do not include temporary computer-readable media (transitory media), such as modulated data signals and carrier waves.

It should be noted that, the terms "include", "comprise" or any other variations thereof are intended to cover a non-exclusive inclusion, such that a process, method, article, or device that comprises a series of elements not only comprises those elements, but also comprises other elements that are not explicitly listed, or further comprises elements that are inherent to the process, method, article, or device. Without further limitations, an element limited by "comprising a..." does not exclude the presence of other identical elements in the process, method, article, or device that includes the element.

Each embodiment in the application is described in a progressive manner, and the same or similar parts between the embodiments may be referred to each other, and each embodiment focuses on the differences from other embodiments. In particular, for the system embodiment, since it is basically similar to the method embodiment, the description is relatively simple, and the relevant parts may be referred to the partial description of the method embodiment.

## Claims

1. A terminal device positioning method, performed by a network-side device, the network-side device comprises a plurality of remote single-TR antennas, wherein the plurality of single-TR antennas are connected to a network-side device body by means of signal feeders respectively, and the plurality of single-TR antennas are deployed at different positions in a target positioning scene, the method comprises:

   measuring, by the plurality of single-TR antennas, a target terminal to obtain a plurality of measurement reports for the target terminal, wherein one single-TR antenna correspondingly obtains one measurement report by measurement, and the measurement report comprises a measured value of a specified parameter for determining a position of the target terminal; and
   determining position information of the target terminal on the basis of the measured values of the specified parameters in the plurality of measurement reports.

2. The method according to claim 1, wherein measuring, by the plurality of single-TR antennas, the target terminal to obtain the plurality of measurement reports for the target terminal comprises:

   receiving, by the plurality of single-TR antennas, sounding signals from the target terminal; and
   analyzing the sounding signals received by the plurality of single-TR antennas respectively to generate the plurality of measurement reports.

3. The method according to claim 1 or 2, wherein the specified parameter comprises at least one of an arrival delay, an angle of arrival, or received signal strength.

4. The method according to claim 1 or 2, wherein lengths of signal feeders by which different single-TR antennas among the plurality of single-TR antennas are connected to the network-side device body are the same or different, wherein determining the position information of the target terminal on the basis of the measured values of the specified parameters in the plurality of measurement reports comprises:

   for any of the plurality of single-TR antennas, determining, on the basis of a length between the single-TR antenna and the network-side device body of a signal feeder corresponding to the single-TR antenna, a propagation delay or path loss of a sounding signal, received by the single-TR antenna, in the signal feeder; and
   determining the position information of the target terminal on the basis of both the measured value of the specified parameter in the measurement report corresponding to the single-TR antenna and the propagation delay or path loss in the signal feeder corresponding to the single-TR antenna.

5. The method according to claim 1, wherein the target positioning scene is an obstacle-free line of sight called LOS scene, a number of the plurality of single-TR antennas is greater than or equal to 2, and the specified parameter comprises at least one of an arrival delay or an angle of arrival.

6. The method according to claim 5, the specified parameter comprises the arrival delay, the number of the plurality of single-TR antennas is greater than or equal to 3, wherein determining the position information of the target terminal on the basis of the measured values of the specified parameters in the plurality of measurement reports comprises:
determining the position information of the target terminal on the basis of both position information of the plurality of single-TR antennas and measured values of the arrival delays in the plurality of measurement reports.

7. The method according to claim 6, wherein lengths of signal feeders by which different single-TR antennas among the plurality of single-TR antennas are connected to the network-side device body are the same or different, wherein determining the position information of the target terminal on the basis of both the position information of the plurality of single-TR antennas and the measured values of the arrival delays in the plurality of measurement reports comprises:

for any of the plurality of single-TR antennas, determining, on the basis of a length between the single-TR antenna and the network-side device body of a signal feeder corresponding to the single-TR antenna, a first propagation delay of a sounding signal, received by the single-TR antenna, in the signal feeder; and determining, on the basis of both the first propagation delay and the measured value of the arrival delay in the measurement report corresponding to the single-TR antenna, a second propagation delay of the sounding signal, received by the single-TR antenna, from the target terminal to the single-TR antenna; and

determining the position information of the target terminal on the basis of the position information of the plurality of single-TR antennas, the second propagation delays corresponding to the plurality of single-TR antennas, and a delay-based positioning method, wherein the delay-based positioning method comprises an uplink time of arrival called UTOA positioning method or an uplink time difference of arrival called UTDOA positioning method.

8. The method according to claim 1, wherein the target positioning scene comprises a scene provided with a plurality of compartments, at least one single-TR antenna is deployed in one compartment, and the specified parameter of at least one single-TR antenna comprises received signal strength.

9. The method according to claim 8, wherein determining the position information of the target terminal on the basis of the measured values of the specified parameters in the plurality of measurement reports comprises:
determining the position information of the target terminal on the basis of both position information of the plurality of single-TR antennas and measured values of the received signal strength in the plurality of measurement reports.

10. The method according to claim 9, wherein determining the position information of the target terminal on the basis of both the position information of the plurality of single-TR antennas and the measured values of received signal strength in the plurality of measurement reports comprises:

for any of the plurality of single-TR antennas, determining, on the basis of a length between the single-TR antenna and the network-side device body of a signal feeder corresponding to the single-TR antenna, a path loss of a sounding signal, received by the single-TR antenna, in the signal feeder; and determining, on the basis of both the path loss and the measured value of received signal strength in the measurement report corresponding to the single-TR antenna, an actual value of received signal strength of the sounding signal, received by the single-TR antenna, from the target terminal to the single-TR antenna; and

determining the position information of the target terminal on the basis of both the position information of the plurality of single-TR antennas and the actual values of received signal strength corresponding to the plurality of single-TR antennas.

11. The method according to claim 10, wherein determining the position information of the target terminal on the basis of both the position information of the plurality of single-TR antennas and the actual values of received signal strength corresponding to the plurality of single-TR antennas comprises:

determining a maximum value from the actual values of received signal strength corresponding to the plurality of single-TR antennas; and

determining a compartment where a single-TR antenna corresponding to the maximum value is located as a target compartment where the target terminal is located.

12. The method according to claim 8 or 11, wherein in the case where at least two single-TR antennas are deployed in a target compartment, and the specified parameters of the at least two single-TR antennas further comprise at least one of an arrival delay or an angle of arrival, the method further comprises:
determining, on the basis of position information of at least two single-TR antennas in the target compartment and measured values of the arrival delay and/or the angle of arrival in measurement reports corresponding to the least two single-TR antennas, position information of the target terminal in the target compartment, wherein the target compartment is one of the plurality of compartments.

**13.** The method according to claim 11, prior to determining the compartment where the single-TR antenna corresponding to the maximum value is located as the target compartment where the target terminal is located, the method further comprises:

determining whether there is abnormality in the measured values of received signal strength in the plurality of measurement reports; and

determining, in the case where it is determined that there is no abnormality in the measured values of received signal strength in the plurality of measurement reports, a position of a compartment where a single-TR antenna corresponding to an extreme value or a maximum value is located as a position where the target terminal is located.

**14.** A network-side device, comprising a plurality of remote single-TR antennas, wherein

the plurality of single-TR antennas are connected to a network-side device body by means of signal feeders respectively; and

the plurality of single-TR antennas are used to measure a target terminal at different positions in a target positioning scene, so as to obtain a plurality of measurement reports for the target terminal, one single-TR antenna correspondingly obtains one measurement report by measurement, and the measurement report comprises a measured value of a specified parameter for determining a position of the target terminal.

**15.** An electronic device, comprising:

a processor; and

a memory for storing instructions executable by the processor;

wherein the processor is configured to execute the instructions, so as to implement the method according to any one of claims 1 to 13.

**16.** A computer-readable storage medium, when instructions in the storage medium are executed by a processor of an electronic device, the electronic device is enabled to perform the method according to any one of claims 1 to 13.

FIG. 1

Measure, by the plurality of single-TR antennas, a target terminal to obtain a plurality of measurement reports for the target terminal, wherein one single-TR antenna correspondingly obtains one measurement report by measurement, and the measurement report comprises a measured value of a specified parameter for determining a position of the target terminal — S201

Determine position information of the target terminal on the basis of the measured values of the specified parameters in the plurality of measurement reports — S202

FIG. 2

FIG. 3

FIG. 4

FIG. 5A

FIG. 5B

FIG. 6

Compartment 1

Compartment 2

First single-TR
antenna panel

Second single-TR
antenna panel

Network-side
device body

Single-TR
antenna panel
4

Single-TR
antenna panel
3

Single-TR
antenna panel
8

Single-TR
antenna panel
7

A user carrying a terminal device

Single-TR
antenna panel
1

Single-TR
antenna panel
2

Single-TR
antenna panel
5

Single-TR
antenna panel
6

FIG. 7

Network-side
device body

Single-TR
antenna panel

Single-TR
antenna panel

Single-TR
antenna panel

· · ·

Single-TR
antenna panel

FIG. 8

FIG. 9

FIG. 10

## INTERNATIONAL SEARCH REPORT

| | International application No. |
|---|---|
| | **PCT/CN2024/096560** |

| A. | CLASSIFICATION OF SUBJECT MATTER |
|---|---|

H04W4/02(2018.01)i

According to International Patent Classification (IPC) or to both national classification and IPC

| B. | FIELDS SEARCHED |
|---|---|

Minimum documentation searched (classification system followed by classification symbols)

IPC: H04L, H04W, G06F

Documentation searched other than minimum documentation to the extent that such documents are included in the fields searched

Electronic data base consulted during the international search (name of data base and, where practicable, search terms used)

DWPI; WPABS; CNTXT; CNKI; ENTXT; 3GPP: 天线, 多个, 基站, 终端, 位置, 定位, 方位, 不同, antenna, multiple, BS, UE, locat+, different

| C. | DOCUMENTS CONSIDERED TO BE RELEVANT | |
|---|---|---|
| Category* | Citation of document, with indication, where appropriate, of the relevant passages | Relevant to claim No. |
| X | US 11265841 B2 (NIPPON TELEGRAPH & TELEPHONE) 01 March 2022 (2022-03-01) claims 1 and 4, and description, paragraphs 36-139 | 1-16 |
| X | US 2022303938 A1 (NIPPON TELEGRAPH & TELEPHONE) 22 September 2022 (2022-09-22) description, paragraphs 28-117 | 1-16 |
| X | CN 1844948 A (CHONGQING UNIVERSITY OF POSTS AND TELECOMMUNICATIONS) 11 October 2006 (2006-10-11) description, pages 3-6 | 1-16 |
| A | CN 112462354 A (ZHEJIANG SUNWAVE COMMUNICATIONS TECHNOLOGY CO., LTD.) 09 March 2021 (2021-03-09) entire document | 1-16 |
| A | US 2022116173 A1 (QUALCOMM INC.) 14 April 2022 (2022-04-14) 1-16 | entire document |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 July 2024** | **04 July 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

# EP 4 723 685 A1

**INTERNATIONAL SEARCH REPORT**
Information on patent family members

International application No.

**PCT/CN2024/096560**

| Patent document cited in search report | | | Publication date (day/month/year) | Patent family member(s) | | | Publication date (day/month/year) |
|---|---|---|---|---|---|---|---|
| US | 11265841 | B2 | 01 March 2022 | WO | 2019230572 | A1 | 05 December 2019 |
| | | | | US | 2021227487 | A1 | 22 July 2021 |
| | | | | JP | 2019207210 | A | 05 December 2019 |
| | | | | JP | 6865194 | B2 | 28 April 2021 |
| US | 2022303938 | A1 | 22 September 2022 | JPWO | 2020255210 | A1 | 24 December 2020 |
| | | | | JP | 7215576 | B2 | 31 January 2023 |
| | | | | WO | 2020255210 | A1 | 24 December 2020 |
| CN | 1844948 | A | 11 October 2006 | | None | | |
| CN | 112462354 | A | 09 March 2021 | | None | | |
| US | 2022116173 | A1 | 14 April 2022 | EP | 4226515 | A1 | 16 August 2023 |
| | | | | WO | 2022077015 | A1 | 14 April 2022 |

Form PCT/ISA/210 (patent family annex) (July 2022)

25

**REFERENCES CITED IN THE DESCRIPTION**

**Patent documents cited in the description**

- CN 202310957816